# EUROPÄISCHE PATENTSCHRIFT

(11) **EP 2 369 170 B1**
(45) Veröffentlichungstag und Bekanntmachung des Hinweises auf die Patenterteilung: **01.05.2013**
(21) Anmeldenummer: 10157611.4
(22) Anmeldetag: 24.03.2010
(51) Int. Cl.: F03B 13/20

(54) **Wellenkraftwerk**
Wave energy power plant
Centrale utilisant l'énergie des vagues

(43) Veröffentlichungstag der Anmeldung: 28.09.2011
(73) Patentinhaber: Sinn, Philipp, 82131 Gauting (DE)
(72) Erfinder: Sinn, Philipp, 82131 Gauting (DE)
(74) Vertreter: Leske, Thomas

(56) Entgegenhaltungen:
- EP-A1- 0 496 146
- WO-A1-96/02748
- WO-A1-2009/138805
- GB-A- 228 914
- US-A- 5 499 889
- US-A1- 2007 257 491
- US-A1- 2008 054 640

## Beschreibung

Die Erfindung betrifft Wellen- oder Impulskraftwerke, welche die natürlich auftretenden Energien aus Wellen- oder Windstößen in nutzbare Energie umwandeln.

Wasserwellen oder Windstöße - die z.B. von Fahrzeugen beim Vorbeifahren an einem Gegenstand erzeugt werden - sind nach wie vor Energieformen, die nur schwer genutzt werden können. Windstöße bzw. Luftdruckwellen, wie sie von Fahrzeugen beim Vorbei- bzw. Entlangfahren erzeugt werden, können als Luftwellen im Rahmen der Erfindung ähnlich betrachtet werden, wie Wasserwellen, welche beispielsweise in Ozeanen auftreten. Fährt ein Fahrzeug an einem Verkehrsschild vorbei, so löst es an dem Verkehrsschild eine wellenartige Druckveränderung aus. Gleiches gilt auch für ein Fahrzeug, welches z.B. neben einer Leitplanke entlang fährt und dessen verdrängte Luft während des Vorbeifahrens an der Leitplanke eine sich mit dem Fahrzeug mitbewegende Druckerhöhung erzeugt und so eine Welle die Leitplanke entlangläuft.

Zur Vereinfachung der Beschreibung des Erfindungsgedankens soll der Erfindungsgedanke anhand von Wasserwellen beschrieben werden, jedoch ist der Erfindungsgedanke darauf nicht beschränkt, da der Erfindungsgedanke in jedem Medium, in welchem Wellen erzeugbar sind, angewendet werden kann, dabei ist der Erfindungsgedanke nicht von der Wellenausdehnungsrichtung abhängig, solange die mit der Welle einhergehende Bewegung des sich wellenförmig bewegenden Mediums eine oszillierende Bewegungen eines Aktuators des erfindungsgemäßen Wellen- oder Impulskraftwerk hervorruft.

Vielfach wird im Stand der Technik das Prinzip zweier sich relativ zueinander bewegender Körper zur Energieumwandlung der Wellenenergie in nutzbare Energie verwendet. Dabei werden oftmals Vorrichtungen verwendet, die sich oszillierend mit der Wellenbewegung auf und ab bewegen und ihre Bewegungsenergie über Linear- oder Drehantriebe in nutzbare Energien umwandeln. Bei den nutzbaren Energien handelt es sich dabei meist um hydraulische oder elektrische Energie.

EP 0 496 146 A1 zeigt eine Wellenenergieumwandlungseinrichtung mit vertikal ausgerichteten, mit dem Meeresgrund fest verbundenen Führungsstangen, an denen torusförmige Schwimmkörper der Wasseroberfläche folgend oszillierend auf und ab bewegt werden. Durch diese vertikale Bewegung der Schwimmkörper wird über einen Generator Gleichstrom erzeugt, der wiederum dazu verwendet wird, Wasser elektrolytisch in Wasserstoff und Sauerstoff aufzuspalten. Durch die feste Verankerung der Führungsstangen im Meeresboden ist die beschriebene Vorrichtung stark gezeitenabhängig und somit auch sehr anfällig bei schwerer See. Sie kann ferner aufgrund der Verankerung der Führungsstangen nur in geringen bis mittleren Wassertiefen eingesetzt werden. Ein Offshore-Einsatz ist für eine derartige Anlage ungeeignet.

Damit sowohl die Wasserspiegelstandsunterschiede auf Grund der Gezeiten als auch Wetterbedingungen gut kompensiert werden können, muss die Länge der Führungsstangen entsprechend lang ausgelegt sein, damit die volle Amplitude der Welle in nutzbare Energie umgesetzt werden kann. Ferner sind die Führungsstangen, welche ebenfalls zur Befestigung der gesamten Anlage dienen, weiterhin so auszulegen, dass sie sämtlichen Witterungsbedingungen standhalten, da sie ortsfest mit dem Meeresboden verbunden sind. Damit wirkt auf die Vorrichtung gemäß EP 0 496 146 A1 die komplette Wasserkraft der auf sie zuströmenden Wellen, wodurch die Ausgestaltung der Führungen der Schwimmkörper entsprechend stabil sein muss.

WO 99 / 28622 beschreibt ein Wellenkraftwerk mit flächig ausgedehnten Pontonen, die durch die Wellenkraft klappbar zu einer Trägerstruktur, welche schwimmend im Wasser angeordnet ist, bewegbar sind. Durch die Klappbewegung der Pontone wird hydraulische Energie erzeugt, welche ans Festland ableitbar ist. Die bevorzugt langgestreckte Ausrichtung der beschriebenen Vorrichtung arbeitet dabei bauartbedingt in einem sehr niedrigen Frequenzbereich, da auf Grund der langgestreckten Ausbildung nicht jeder Wellenberg und jedes Wellental nachgeführt werden kann. Die Größe der Pontone lässt auch eine Hochseefähigkeit (Off-Shore-Fähigkeit) nicht zu. Durch die langgestreckte Ausbildung der Anlage ist auch deren Ausrichtung längs zur Wellenausdehnungsrichtung - in der die Anlage bevorzug betrieben wird - erschwert, was durch die feste Anbindung durch Leinen am Festland zusätzlich erschwert wird. Wellen, die quer zur Längsrichtung der Anlage verlaufen können von dieser nicht nur nicht verwertet werden, sondern stehen der Beweglichkeit der Klappbarkeit der Pontone entgegen und können so unter Umständen der Anlage Schäden zufügen.

WO 01/73289 A1 zeigt eine Wellenenergieumwandlungsvorrichtung mit einem Schwimmkörper, der an einer im Wasser schwimmend gelagerten Führung linear und kippbar gelagert ist. Für die Umwandlung der Wellenenergie in nutzbare Energie sollen hierbei sowohl die linearen Bewegungsanteile als auch Kippbewegungen des Schwimmkörpers ausgenutzt werden. Die bevorzugt mittels Generatoren umgewandelte elektrische Energie soll dann ans Festland geleitet werden. Diese in Art einer Boje taumelnde Vorrichtung wandelt Wellenenergie in elektrische Energie um, jedoch können damit keine quantitativ nutzbaren Mengen an Energie erzeugt werden. Die für den Off-Shore-Einsatz geeignete Vorrichtung ist beispielsweise zum Beleuchten von Bojen einsetzbar, jedoch trägt nur eine einzige Schwimmereinheit das gesamte Gewicht der Vorrichtung inklusive des Aktuators. Dadurch kommt eine Relativbewegung zwischen Schwimmer und Aktuator nur bei rasch erfolgenden stark beschleunigten Bewegungen zustande. Wird die Vorrichtung langsam bewegt, so bewegen sich Aktuator und Schwimmer gleichförmig, wobei keine Energie umgewandelt werden kann. Der Wirkungsgrad der Vorrichtung nimmt also mit Zunahme rauer Seeverhältnisse zu.

GB 228,914 A zeigt eine Vorrichtung zum Gewinnen von Energie aus Wellenkraft, bei der zwei Platten im Wesentlichen parallel zueinander angeordnet sind. Dabei soll sich die untere Platte, welche auf der Wasseroberfläche schwimmt und sich über Federn gegen die obere Platte abstützt, angetrieben von Wellen oszillierend bewegen. Die dadurch angetriebenen Kolbenstangen, welche durch die obere Platte längs ihrer Längsachse geführt sind, setzen einen Kurbelantrieb in Bewegung, der wiederum einen Dynamo antreibt.

US 5,499,889 zeigt eine an schwimmenden Pfeilern gehaltene Trägerstruktur, an welcher Schwimmkörper aufgehängt sind, welche durch die Wellenbewegung ausgelenkt werden. Die Schwimmkörper werden dabei vertikal nach oben durch die Wellen angehoben und fallen durch die Schwerkraft wieder auf die Wasseroberfläche zurück.

US 4,622,473 zeigt im Prinzip eine ähnliche Vorrichtung wie US 5,499,889, wobei hier in der Art einer Kolbenmaschine Kolben durch Schwimmkörper in einem Zylinder bewegt werden, wodurch ein weiteres Fluid in Bewegung gesetzt wird. Die Strömung des zweiten Fluids wird dann zur Energiegewinnung verwendet. Dabei werden Kolben bei einem Durchgang einer Welle über einen Schwimmkörper in dem Zylinder nach oben bewegt, wobei sich das Zylindervolumen verkleinert. Nach Durchgang der Welle sinkt der Schwimmkörper wieder ab, wodurch sich das Volumen im Zylinderkörper vergrößert und das zweite Fluid in dem Zylinderraum eindringen kann. Die Anlage arbeitet also nach dem Prinzip einer Kolbenpumpe.

US 2008/0054640 A1 zeigt eine Vorrichtung zur Umwandlung von Wasserwellenenergie mittels einer schwimmenden Boje, die über eine Feder gegen ein im Wasser versenkte Trägerstruktur elastisch vorgespannt ist, und sich entlang von Führungsstangen angetrieben durch die Wellenbewegung oszillierend bewegen kann. Dabei sind die Führungsstangen gelenkig mit der Trägerstruktur verbunden, damit bei Überfahrt der Vorrichtung durch ein Schiff weder die Vorrichtung noch das Schiff beschädigt wird. Durch die gelenkige Anbindung wird die Boje durch die Wellen in Wellenfortplanzungsrichtung ausgelenkt und schwenkt nach Wellendurchgang in die vertikale Ausrichtung zurück. Die gelenkige Anbindung ist dabei den permanent der Einflüssen des die Vorrichtung umgebenden Salzwassers ausgesetzt, wobei hierzu entsprechende Vorkehrungen getroffen werden müssen, damit die Führungsstangen relativ zu der Trägerstruktur schwenkbar bleiben und die gelenkige Anbindung nicht korrodiert.

Für den Fachmann ergibt sich also die Aufgabe, eine Vorrichtung vorzusehen, die die Wellenenergie in nutzbare Energie umwandelt, wobei eine einfache und robuste Bauform zur effizienten Energieumwandlung ausgebildet sein soll. Ferner stellt sich die Aufgabe, wie eine solche Vorrichtung ausgebildet werden soll, damit sie unabhängig von der Wassertiefe und unabhängig von den Gezeiten bzw. unempfindlich gegenüber Witterungsbedingungen ist. Außerdem sollen Wellen unterschiedlicher Richtungen, unterschiedlicher Amplituden und Frequenzen gleichermaßen nutzbar sein. Dabei soll die Vorrichtung zur Umwandlung von Wellenenergie ausgehend von US 2008/0054640 A1 einen optimalen Wirkungsgrad aufweisen und weniger zueinander bewegliche Teile aufweisen, die vor Umwelteinflüssen aufgrund der Einsatzbedingungen geschützt oder speziell angepasst werden müssen.

Die Aufgabe wird durch ein Wellenkraftwerk gemäß Anspruch 1 gelöst. Bevorzugte Ausführungsformen sind in den Unteransprüchen 2 bis 12 angegeben.

Das erfindungsgemäße Wellen- oder Impulskraftwerk weist eine Vielzahl von flächig, im Wesentlichen nebeneinander angeordneten Schwimmkörpern auf, die durch Wellen angetrieben werden und sich dabei unabhängig voneinander oszillierend entlang von Führungen bewegen. Die Führungen sind dabei so angeordnet, dass sie im Wesentlichen in Richtung der Amplitude der Wellen zeigen. Im Falle von Druckwellen, wie z.B. Luftdruckwellen, erzeugt durch vorbeifahrende Fahrzeuge, können die Führungen bspw. auch im Wesentlichen parallel zur Fahrtrichtung von Fahrzeugen stehen, die etwa an einem Verkehrsschild vorbei- oder unter einem solchen hindurchfahren. Sind die Luftdruckkörper bspw, an Leitplanken angebracht, so sind ihre zugehörigen Führungen im Wesentlichen senkrecht zu Fahrrichtung der Fahrzeuge angeordnet.

Die an den Führungen geführten Schwimmkörper (Luftdruckkörper) können sich einzeln unabhängig von dem jeweilig benachbarten Schwimmkörper in Längsrichtung der Führungen oszillierend bewegen. Die Schwimmkörper sind dabei so ausgebildet, dass sie auf Grund ihrer geometrischen Abmessungen nicht aneinander stoßen. Die Schwimmkörper können in jeder Form sowohl rund als auch rechteckig bzw. quadratisch - gesehen in der Ebene quer zur Bewegungsrichtung - ausgebildet sein. Die einzelnen Schwimmkörper weisen keine mechanische Verbindung untereinander auf und können sich somit entlang ihrer jeweiligen Führung frei bewegen. Im Falle eines Flüssigkeitswellenkraftwerks sind die Schwimmkörper derart ausgebildet, dass sie auf der Oberfläche schwimmen, d.h. ihre Auftriebskraft größer ist als ihre immanente Gewichtskraft. Bevorzugt sind die einzelnen Auftriebskräfte so groß, dass das Gewicht der Trägerstruktur durch die Summe der Auftriebskräfte der Schwimmkörper ohne weiteres gehalten werden kann, wobei der Wirkungsgrad der Anlage mit steigendem Auftriebskraftüberschuss der Schwimmkörper gegenüber der Gewichtskraft des Kraftwerkes steigt, da hierdurch die Beweglichkeit der Schwimmkörper gegenüber der Trägerstruktur gesteigert wird. Somit werden im Falle eines Wasserwellenkraftwerks die Schwimmkörper bevorzugt Hohlkörper, Schaumstoffkörper oder Körper aus ähnlich leichtem Volumenmaterial sein.

Im Falle von Luft als wellenbewegtes Medium ist jeder Körper geeignet, der durch die Luftbewegung in Bewegung versetzt werden kann. Bevorzugt finden hier plattenförmige Schwimmkörper, welche hier auch als Luftdruckkörper bezeichnet werden Anwendung, die flächig gegen die Bewegungsrichtung der wellenförmig bewegten Luft an Führungen vorgespannt sind und von diesen geführt werden. Eine sich neben einem fahrenden Fahrzeug ausbildende Druckwelle, die sich gleichzeitig horizontal und vertikal ausbreitet, kann dabei die Luftwiderstandselemente relativ zu der Trägerstruktur, an der die Führungen für die Widerstandskörper angeordnet sind, bewegen, wobei die Führungen in Ausbreitungsrichtung der von dem fahrenden Fahrzeug erzeugten Druckwelle weisen.

Die Führungen, welche in Kraftrichtung bzw. Amplitudenrichtung der Welle angeordnet sind, sind über Verstrebungen fest miteinander verbunden. Die Verstrebungen sind dabei bevorzugt so angeordnet, dass freie Enden der Führungen ausgebildet sind, entlang denen sich die Schwimmkörper frei bewegen können. Die so einseitig in einer Trägerstruktur (Verstrebungen) aufgenommenen Führungen sind zueinander im Wesentlichen parallel angeordnet, so dass die Verstrebungen mit den Führungen eine nagelbrett-artige Trägerstruktur ausbilden. Die Länge der Führungsstangen richtet sich nach der jeweiligen zu erwartenden Wellenhöhe, der daraus resultierenden Wellenkraft und der dadurch ausgelösten Hubbewegung. Auf jeden Fall reichen sie nicht bis zum Gewässergrund.

Die über die Führungen geführten Schwimmkörper bzw. Luftwiderstandskörper sind gleichzeitig über elastische Elemente gegenüber der Trägerstruktur vorgespannt, so dass die einzelnen Schwimmkörper nach einer Auslenkung wieder in Richtung ihrer Ausgangsposition zurückbewegt werden. Durch die flächenhafte, im Wesentlichen parallel zur Wasseroberfläche ausgerichtete, ausgedehnte und in sich steife Trägerstruktur können sich die Schwimmkörper individuell an den Führungsstangen bewegen. Die Trägerstruktur, welche auch plattenförmig ausgebildet sein kann, agiert dabei als eine träge Masse, da sie im Vergleich zu einem einzelnen Schwimmkörper nicht nur großflächig ausgebildet ist, sondern alle Schwimmkörper als eine Trägerstruktur überspannt. Während ein Schwimmkörper bevorzugt in der Ebene quer zur Amplitude bzw. Bewegungsrichtung kleiner ausgebildet ist als der Abstand zwischen zwei Wellenbergen, d.h. kleiner als die Wellenlänge, ist die Trägerstruktur in einer parallelen Ebene in ihren Abmessungen mindestens so groß wie eine Wellenlänge ausgebildet. Bevorzugt überspannt die Trägerstruktur jedoch eine Vielzahl von Wellen. Damit wird erreicht, dass die Trägerstruktur gegenüber der Vielzahl der Schwimmkörper in Amplitudenrichtung, welche im Wesentlichen der Bewegungs- bzw. der Ozillationsrichtung der Schwimmkörper entspricht, unbewegt bleibt. Dabei steigt die Trägheit der Trägerstruktur mit ihrer Ausdehnung, d.h. je größer die Trägerstruktur, desto ruhiger kann diese bspw. im Wasser schwimmend gehalten werden. Trägerstrukturen für Impulskraftwerke aus bewegter Luft können jedoch ortsfest befestig werden, um so gegenüber den Bewegungskörpern an der Stelle zu verharren.

Durch die Ausbildung der Trägerstruktur größer als die Wellenlänge der Wellen, welche die Schwimmkörper zur oszillierenden Bewegung anregen, wird eine Vorrichtung bereitgestellt, die ähnlich einem Fahrwerk eines Kraftfahrzeugs ausgebildet ist. Kraftfahrzeuge weisen üblicherweise eine Einzelradaufhängung auf, was bedeutet, dass jedes einzelne Rad unabhängig von den anderen Rädern des Fahrzeugs Ein- bzw. Ausfedern kann, wobei die darüber angeordnete Trägerstruktur (Karosserie) möglichst unbeeinflusst von diesen Vorgängen bleibt. Ähnlich einem Kraftfahrzeug weist die erfindungsgemäße Energieumwandlungsvorrichtung für Wellenenergie eine Vielzahl an der Trägerstruktur vorgespannt angeordneten und an Führungen geführten Schwimmkörper auf, die sich aufgrund des erheblichen Trägheitsunterschiedes zwischen Schwimmkörper und Trägerstruktur unabhängig voneinander entlang der Führungen bewegen können. Ähnlich einem Kraftfahrzeug wird die Trägerstruktur der erfindungsgemäßen Vorrichtung durch die Summe der Federkräfte beabstandet von den Schwimmkörpern gehalten. Im Falle einer vertikal über den Schwimmkörpern eines erfindungsgemäßen Wellenkraftwerks angeordneten Trägerstruktur, wird diese von den Schwimmkörpern sozusagen getragen. Die Trägerstruktur ist also auf der Vielzahl der Schwimmkörper elastisch in Amplitudenrichtung der Wellen gelagert, ähnlich eines Fahrwerks eines Kraftfahrzeugs.

Die Vielzahl der Schwimmkörper bewegen sich gesehen in Wellenausdehnungsrichtung wellenförmig nacheinander, wie eine Welle, die durch das Wellenkraftwerk läuft, dabei heben und senken sich die Schwimmkörper relativ zur Trägerstruktur während des Durchgangs der Welle (ähnlich einer "La Ola-Welle" in einem Sportstadion). Gleiches gilt für Druckwellen oder Stoßwellen, welche bspw. durch ein an einem Verkehrsschild, Leitplanke oder ähnlichem vorbeifahrendem Fahrzeug erzeugt werden. Hier wird kurzzeitig vom vorbeifahrenden Fahrzeug eine Luftdruckkraft auf die Druckkörper (Schwimmkörper) der Vorrichtung erzeugt, die die Druckkörper entlang von Führungen auf die Trägerstruktur zu oder weg bewegen.

Im Allgemeinen gilt, dass je kleiner die Schwimmkörper desto genauer d.h. empfindlicher können die Schwimmkörper auf Niveauunterschiede bzw. Druckunterschiede reagieren und die Wellenbewegung mitmachen. Dabei ist von entscheidender Bedeutung, wie das Flächengewicht der Schwimmkörper gegenüber dem Flächengewicht der Trägerstruktur ausgebildet ist. Unter Flächengewicht soll hierbei das Gewicht bzw. die Auftriebskraft des Schwimmkörpers bezogen auf seine flächenhafte Ausdehnung quer zur Bewegungsrichtung verstanden werden. Für die richtige Auslegung der Größen bzw. der Gewichtsverhältnisse zwischen Trägerstruktur, elastischem Element und Schwimmkörper sind die vor Ort herrschenden Verhältnisse zu berücksichtigen. Dabei spielen geologische Einflüsse ebenso eine Rolle, wie Witterungseinflüsse oder auch das Verkehrsaufkommen auf Kraftfahrstraßen oder Eisenbahnstrecken und Ähnlichem. Nicht außer Acht gelassen werden darf dabei eine Bestimmung der maximal zu erwartenden Wellenbewegungen bzw. Wellenkräften, wobei durch Vorsehen geeigneter Anschläge für die Schwimmkörper an den Führungsstangen eine Beschädigung der Vorrichtung durch Überlast weitestgehend ausgeschlossen werden kann. Durch Vorsehen solcher Anschläge kann bspw. ein Durchschlagen der Schwimmkörper auf die Trägerstruktur verhindert werden.

Die insgesamt im Falle von Wasserkraftwerken schwimmend gelagerte Anordnung der gesamten Vorrichtung ist unabhängig von den Gezeiten, d.h. Ebbe und Flut, und auch weitestgehend unempfindlich gegen Witterungsveränderungen, wie Sturm oder hoher Seegang. Dies macht die erfindungsgemäße Vorrichtung somit auch auf offshore-tauglich, d.h. sie kann auch auf hoher See eingesetzt werden, da sie sich automatisch dem Wasserspiegel anpasst.

Jedoch muss die sich teppichartig über die Wasseroberfläche ausbreitende Vorrichtung mit einer Leine gegen Abdriften gesichert werden. Eine solche Leine kann bspw. an einem Punkt der Vorrichtung befestigt werden und kann mit einem anderen Punkt mit dem Erdboden oder bspw. mit einem Anker, einer Bohrinsel oder einem Schiff verbunden sein. Selbstredend kann das erfindungsgemäße Wellenkraftwerk auch über mehrere Leinen und Anbindungspunkte ortsfest gegenüber dem Boden quer zur Bewegungsrichtung der Schwimmkörper verankert werden. Jedoch ist eine Ankerung nicht unbedingt erforderlich. Eine Befestigung an einer Muring ist ebenfalls ausreichend. Jedenfalls ist eine Sicherung gegen ungewolltes Wegschwimmen für die Funktion der erfindungsgemäßen Wellenkraftumwandlungsvorrichtung ausreichend. Eine die vertikale Bewegungsfreiheit einschränkende Befestigung der Anlage bspw. mit dem Boden ist jedoch zu vermeiden.

Wird das erfindungsgemäße Wellenkraftwerk in seiner flächenartigen bspw. teppichartigen Ausdehnung nur über einen Punkt mittels einer Leine gegen Abtreiben gesichert, so kann sich das Wellenkraftwerk, ähnlich einem Schiff, bspw. um einen Anker drehen und sich so nach der vorherrschenden Wellenrichtung ausrichten. Wie jeder angeströmte Körper wird sich auch die erfindungsgemäße Wellenkraftumwandlungsvorrichtung immer mit der Seite gegen die Wellenausdehnungsrichtung stellen, die den geringsten Wellenwiderstand aufweist. Somit ist eine bevorzugte Ausführungsform für die flächenhafte Anordnung der Schwimmkörper an einer Trägerstruktur, die einer tropfenförmigen Gestalt, betrachtet in einer Ebene senkrecht zur Bewegungsrichtung der Schwimmkörper. Andere Gestaltungsformen wie bspw. eine runde, dreieckige, rechteckige oder sonstige flächige Gestaltung sind aber ebenfalls vom Erfindungsgedanken umfasst.

Der Anbindungspunkt einer Leine Kette oder Ähnlichem zum Sichern des Kraftwerks gegen Abtreiben muss dabei nicht unbedingt am Rand der Vorrichtung angeordnet sein, sondern kann auch in der Ebene der flächenhaften Ausdehnung in etwa mittig angeordnet sein, sodass sich die Vorrichtung gewissermaßen um sich selbst drehen kann.

Ist das Kraftwerk z.B. mit einem Eckpunkt an einer Leine angebunden, welche bspw. mit einem Anker mit dem z.B. Meeresboden verbunden ist, so muss darauf geachtet werden, dass im kompletten Schwenkbereich um den Anker keine weiteren Gegenstände vorhanden sind, die zu einer Kollision mit dem Wellenkraftwerk führen können. Bezieht man die Ausbeute der umwandelbaren Wellenenergie auf die durch das Wellenkraftwerk bedeckte Fläche so erkennt man, dass hier, speziell durch die große Ausdehnung quer zur Wellenausdehnungsrichtung, eine sehr hohe Energieumwandlungseffizienz erreicht wird, selbst wenn man einen Bereich absperren muss, in dem das Wellenkraftwerk frei schwenkbar sein muss. Folglich wird man den Anbindungspunkt zur Sicherung gegen Abdriften des Wellenkraftwerks möglichst zentral wählen, so dass die freizuhaltende Fläche möglichst klein ist.

Wie oben schon ausgeführt, ist das erfindungsgemäße Wellenkraftwerk unabhängig von den Gezeiten, da es auf der Wasseroberfläche schwimmt und keinen fixen Abstand zum Meeresboden bzw. Seeboden oder Flussboden aufweist. Damit sind auch Kräfte, welche quer zur Amplitudenrichtung der Wellen wirken, durch die Vorrichtung besser ausgleichbar, da solche Kräfte leicht abgefedert werden können. Ferner taucht die erfindungsgemäße Vorrichtung aufgrund ihrer schwimmend gelagerten Einzelschwimmkörperaufhängung nicht sehr tief in das wellenbewegte Medium ein, sodass Querkräfte nur eine geringe Angriffsfläche finden. Da die Führungen also nicht bis zum Grund hinabreichen müssen, können diese im Vergleich zur Vorrichtung aus dem Stand der Technik vergleichsweise dünn ausgebildet sein, womit ihre Kraftangriffsfläche für Querkräfte gering ist, welche aufgrund des geringen Tiefgangs der Führungen weiter reduziert ist. Damit können die Führungen im Vergleich zum Stand der Technik nicht nur leichter, sondern auch kostengünstiger hergestellt werden.

Die Führungen, welche bevorzugt nur einseitig mit der Trägerstruktur verbunden sind, können in einer anderen Ausführungsform auch an den der Trägerstruktur gegenüberliegenden Enden miteinander verbunden sein, um bspw. ihre Steifigkeit in Querrichtung und ihre Parallelität untereinander zu unterstützen. Genauso wie die freien Enden der Führungen in einer Ausführungsform in Richtung Boden bzw. gegen die Aufwärtsbewegung bzw. Druckwellenrichtung weisen, ist auch eine umgekehrte Anordnung denkbar bei der die Trägerstruktur bspw. unterhalb des Wasserspiegels angeordnet und somit an den Schwimmkörpern aufgehängt ist. Dass eine solche Umkehrung der Funktionsweise des erfindungsgemäßen Wellenkraftwerks mit vom Erfindungsgedanken umfasst ist, ist für einen Fachmann selbstverständlich. Zur Vermeidung von Wiederholungen wird hier auf eine detailliertere Darstellung verzichtet.

Durch die im Wesentlichen frei schwimmende Anordnung der Vorrichtung mit Sicherung gegen Abdriften mittels einer oder mehrerer Leinen, Ketten o. Ä. ist eine große Betriebssicherheit des Wellenkraftwerks gegeben, da weder Gezeiten noch starker Wellengang oder starker Wind der Funktionstüchtigkeit des erfindungsgemäßen Wellenkraftwerkes entgegenstehen. Sollte jedoch aufgrund von extremen Wetterlagen, wie z.B. Wirbelstürmen oder dergleichen, dennoch die Gefahr bestehen, dass sich das erfindungsgemäße Wellenkraftwerk von seiner Leine löst oder sonstige Gefahren, wie Losreißen oder Kippen der Vorrichtung bestehen, so können die Schwimmkörper geflutet werden, sodass das erfindungsgemäße Wellenkraftwerk unter die Wasseroberfläche abtaucht. Dabei ist bspw. eine Flutung der Schwimmkörper derart denkbar, dass die gesamte Anordnung unterwasser in einem Gleichgewicht ist und sozusagen knapp unter der Wasseroberfläche schwebt, damit das Kraftwerk bei Wetterbesserung wieder einfach, z.B. über Leinen geborgen werden kann. Selbstredend ist natürlich eine Absenkung bis auf den Boden bspw. den Meeresboden eine weitere Möglichkeit die erfindungsgemäße Vorrichtung aus einer Gefahrenzone herauszubringen, damit bspw. der Schiffsverkehr nicht behindert wird. Über Pressluft, welche den einzelnen Schwimmkörpern zugeführt wird, kann das Medium, auf dem das Kraftwerk schwimmen soll, vor oder nach dem Aufstieg zur Oberfläche aus der Vorrichtung wieder ausgeblasen werden.

Da es zu solchen Extremsituationen nur selten kommt bzw. in solch gefährdeten Zonen nur derartige Wellenkraftwerke, die mit einem Unwetterschutz ausgestattet sind, verwendet werden sollen, ist die Funktionstüchtigkeit des vorgeschlagenen Wellenkraftwerks praktisch immer und überall in Wellenbewegten Medien gegeben.

In welche Energie die Bewegungsenergie umgewandelt werden soll, wird bspw. durch Parameter wie durchschnittliche Wellenlänge, durchschnittliche Wellenhöhe, durchschnittliche Windgeschwindigkeiten, geologische Verhältnisse, Veränderungen über die Jahreszeiten hinweg, Wassertemperaturen, maximale Wellenhöhe, etc. beeinflusst. Dies gilt nicht nur für die Auslegung der Abmessungen der einzelnen Schwimmkörper und damit des Trägerkörpers, sondern insbesondere hinsichtlich der Frage, welche nutzbare Energie das erfindungsgemäße Wellenkraftwerk zur Verfügung stellen soll, bspw. welche Energie ein potentieller Abnehmer aufnehmen kann. Im Allgemeinen kommen hierfür elektrische, hydraulische, pneumatische oder optische Energien in Frage. Die zahlreichen im Stand der Erfindung beschriebenen Vorrichtungen zur Umwandlung der Wellen- bzw. Bewegungsenergie der Schwimm- bzw. Bewegungskörper in eine der vorgenannten Energiearten können hierbei zum Teil Anwendung finden. Gleichfalls von entscheidender Bedeutung ist, welche Verbraucher von der Wellenenergieanlage mit Energie versorgt werden sollen. So wird man bspw. einen Anzeiger für Untiefen bevorzugt mit elektrischer Energie versorgen, damit dieser Licht abstrahlen und vorbeifahrende Schiffe warnen kann. Jedoch wird man zur Wandlung großer elektrischer Energiemengen eventuell hydraulische Energie aus dem Wellenkraftwerk bevorzugen.

Eine Möglichkeit der Energieumwandlung aus der oszillierenden Bewegung der Schwimmkörper ist mittels Induktion, wobei die Führungsstangen hierbei einen magnetischen Kern darstellen können. Eine umgekehrte Anordnung ist für den Fachmann hierbei ebenso vorstellbar. Aus vielen induktiv erzeugten Strömen (Stromstößen) kann dann über eine geeignete Vorrichtung nach Aufsummieren der Ströme ein konstanter Strom erzeugt werden. Dabei kann die Höhe der einzelnen durch die Relativbewegung der Schwimmkörper gegenüber den Führungen erzeugten Ströme, d.h. die Höhe der Stromstärke bzw. Spannung, unterschiedlich sein. Durch die Vielzahl der Schwimmkörper bildet sich eine Durchschnittsstromstärke bzw. Durchschnittsspannung aus, welche genutzt werden kann.

Vorzugsweise wird zur Umwandlung der Bewegungsenergie der Schwimmkörper in die gewünschte Energieart die kinetische Energie mittels Übertragungselementen - die auf den Schwimmkörpern und auf den Führungen und/oder der Trägerstruktur angeordnet sein können - auf Energieumwandlungseinrichtungen übertragen. Hierbei kommen die verschiedensten Elemente in Frage, die die Bewegungsenergie der Schwimmkörper aufnehmen und/oder direkt umwandeln können, wie z.B. Generatoren, Pumpen, Kolben, etc. So kann ein Schwimmkörper etwa mittels eines Mitnehmers einen in der Führung angeordneten Kolben bewegen, der wiederum ein Fluid in Bewegung oder unter Druck setzt. Ein Schwimmkörper kann aber auch eine Art Pleuel aufweisen, welches beispielsweise einen Drehantrieb an der dem Schwimmkörper zugehörigen Führung antreibt.

Die bevorzugte Art der Energiewandlung ist das Ausnutzen des induktiven Effektes, wobei die Übertragungselemente dabei Magnete und elektrische Leiter aufweisen. Egal welche Umwandlungsart gewählt wird, es muss gewährleistet bleiben, dass sich die Schwimmkörper unabhängig voneinander entlang ihrer Führungen bewegen können. Eine Kopplung der Bewegungen der Schwimmkörper führt zu Einschränkungen der Beweglichkeit der Schwimmkörper und die von der Welle übertragbare Energie wäre nur beschränkt oder gar nicht aufnehmbar.

Durch die obigen Darstellungen weist ein erfindungsgemäßes Wellen- oder Impulskraftwerk gemäß der Erfindung eine Vielzahl von Vorteilen auf, wie z.B. eine einfache und robuste Bauform. Dies wird zum einen dadurch erreicht, dass durch die in sich steife Trägerstruktur die Schwimmkörper unabhängig voneinander relativ zu der Trägerstruktur oszillieren können und dabei unabhängig voneinander die Bewegungsenergie in andere Energieformen umwandeln können. Die Trägerstruktur bildet eine im Wesentlichen unbewegliche Ebene und folgt nicht der Wellenbewegung. Jedoch kann das erfindungsgemäße Wellenkraftwerk den Wasserniveauunterschieden, die durch die Gezeiten hervorgerufen werden, ohne weiteres folgen und benötigt auch keine Anpassung bei Gezeiten- oder Wasserstandwechsel. Eine aufwendige Kopplung der Schwimmkörper untereinander entfällt vollständig. Weitere Vorteile ergeben sich aus der freien Formgebung der Trägerstruktur. Speziell in den Abmaßen in Allgemein horizontaler oder vertikaler Richtung ist die Anlage leicht skalierbar. Die Anlage kann dadurch auch auf den Bedarf, welcher durch das Wellenkraftwerk gedeckt werden soll, individuell angepasst werden.

Ebenfalls von Vorteil ist bei der freien Formgebung, dass strömungsangepasste Formen leicht realisierbar sind. Da zusätzlich keine Abhängigkeit zur Wassertiefe bzw. eine fast vollständige Witterungsunabhängigkeit gegeben ist, kann das Kraftwerk kontinuierlich das ganze Jahr über betrieben werden, solange das sie umgebende Medium ein Fluid bzw. ein Gas ist.

Im Vergleich zu Energieumwandlungsvorrichtungen aus Wellen, welche aus dem Stand der Technik bekannt sind, können durch die flächenhafte Ausdehnung der erfindungsgemäßen Energieanlage auch große Mengen an Energie aus der Wellenbewegung z.B. der Meeresoberfläche aufgenommen werden. So sind bspw. Anlagen mit einer Ausdehnung von mehreren Fußballfeldern ohne weiteres vorstellbar und auch realisierbar. Für kleinere Anwendungen, wie z.B. zur Energieumwandlung aus vorbeifahrenden Fahrzeugen an Leitplanken von Kraftfahrstraßen, kann die Anlage mit Platten zur Windaufnahme/Druckwellenaufnahme auch bspw. in Bierdeckelgröße ausgeführt werden.

Durch die gute Unabhängigkeit von äußeren Einflüssen ist die erfindungsgemäße Anlage speziell bei der Erzeugung von nutzbarer Energie aus Wellenbewegungen auch offshore-fähig, was bspw. bei der Energieversorgung von Hochseebohrinseln von Vorteil sein kann. Auch kann eine erfindungsgemäße Anlage in wenig zugänglichen Gebieten installiert werden und bspw. im Falle von Energiewandlung in elektrische Energie bspw. mit einem Unterseekabel an das Festland liefern.

Aufgrund des einfachen Aufbaus und der sich daraus ergebenden Robustheit kann die erfindungsgemäße Anlage auch unabhängig von Wassertemperaturen oder Lufttemperaturen eingesetzt werden, solange diese im Vorfeld als Temperatur- Arbeitsbereich definiert wurden. So kann eine erfindungsgemäße Anlage bspw. sowohl in der Südsee als auch in der Nordsee zum Einsatz kommen oder auch an Verkehrswegen von Großstädten oder Dörfern installiert werden.

Für eine weitere Steigerung der Energieumwandlungseffizienz bezogen auf die belegte Fläche können auf der Trägerstruktur weitere Energieumwandlungsvorrichtungen vorgesehen werden. So ist es z.B. denkbar auf der der Wasseroberfläche abgewandten Seite der Trägerstruktur, Sonnenkollektoren zur Umwandlung von Sonnenenergie in elektrische Energie (Photovoltaik) oder Sonnenenergie in thermische Energie (Solarthermie) zusätzlich anzuordnen. Es können aber auch andere Vorrichtungen aus der schwimmenden Trägerstruktur der erfindungsgemäßen Energieumwandlungsanlage Nutzen ziehen wie z.B. Windenergieanlagen, wenn diese so angeordnet werden, dass die Trägerstruktur weiterhin im Allgemeinen horizontal auf der Wasseroberfläche, d.h. senkrecht zur Auslenkungsrichtung der Schwimmkörper, angeordnet bleibt.

Denkbar ist aber auch der umgekehrte Fall in dem bspw. in Windparks der zwischen den einzelnen Windrädern nicht ohne Weiteres nutzbare Raum von einem erfindungsgemäßen Impulskraftwerk überspannt werden kann., Dabei können bspw. zwischen zwei, drei, vier oder mehreren Stützpfeiler der Windräder zur Erzeugung elektrischer Energie aus Windkraft ein oder mehrere erfindungsgemäße Impulskraftwerke - auch vertikal übereinander -derart angebracht werden, dass die bewegte Luft, welche zwischen den Pfosten der Windräder hindurch strömt die einzelnen Bewegungskörper/Luftwiderstandskörper in Bewegung versetzt. Damit wird zum einen eine bessere energetische Flächenausnutzung der vorhandenen Windparks erreicht und zum anderen eine gute infrastrukturelle Einbindung zweier verschiedener Energieumwandlungseinrichtungen realisiert.

Bei Windenergieanlagenparks die in Ufernähe eines Gewässers errichtet sind, gilt das oben genannte sinngemäß d.h. die erfindungsgemäße Energieumwandlungsvorrichtung kann dort auch mit Wellenkraft betrieben werden, wobei die Trägerstruktur entweder schwimmend über der Wasseroberfläche oder schwimmend unter der Wasseroberfläche angeordnet ist. Über ein, zwei oder mehreren Pfosten der Windanlage kann das erfindungsgemäße Wellenkraftwerk dann gegen Abtreiben gesichert werden.

Die oben erfolgten Darstellungen der erfindungsgemäßen Vorrichtung soll nun anhand von Figuren an einem bevorzugten Ausführungsbeispiel dargestellt werden. Die bevorzugte Ausführungsform wird beispielhaft anhand eines Wasserwellenkraftwerkes dargestellt, wobei die gemachten Ausführungen sinngemäß auch für ein Impulskraftwerk, welches durch Luftimpulse angetrieben wird, gelten. Die Ausführungsform wird in zwei Figuren dargestellt und beschrieben, dabei zeigen:
- Figur 1: eine perspektivische schematische Darstellung eines Wellenkraftwerks gemäß der Erfindung;
- Figur 2: eine perspektivische schematische Darstellung eines flächenhaft ausgebildeten Wellenkraftwerks gemäß der Erfindung;

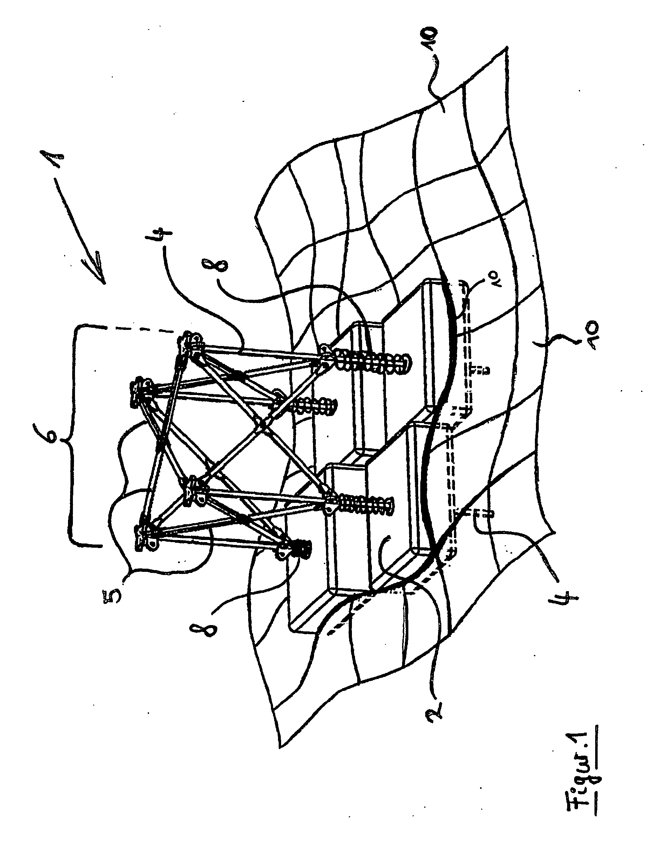

In Figur 1 ist beispielhaft eine Welle (10) dargestellt, auf der ein erfindungsgemäßes Wellenkraftwerk 1 angeordnet ist. Das beispielhaft aus vier Schwimmkörpern 2 mit den zugehörigen vier Führungen 4 ausgebildete Kraftwerk ist in Figur 1 vereinfacht dargestellt, um den Grundgedanken der Erfindung zu verdeutlichen. Die verschiedenen Schwimmkörper 2 können, wie aus Figur 1 ersichtlich, unabhängig voneinander an den Führungen 4 im Wesentlichen senkrecht auf und ab oszillieren. Die Führungsstangen 4 sind hierbei im Wesentlichen senkrecht, d. h. vertikal zur Wasseroberfläche ausgerichtet und werden über Verstrebungen 5 in Position gehalten. Dabei sind die Führungen 4, welche im Bereich der Verstrebungen zusammen mit diesen eine Trägerstruktur 12 ausbilden, nur mit einem Ende in der Trägerstruktur aufgenommen. Die freien Enden der Führungen weisen auf den Meeresgrund. Wie bereits oben ausgeführt müssen die Führungen 4 nicht notwendigerweise nur über Verstrebungen 5 miteinander verbunden sein, sodass ihre parallele Anordnung zueinander gewährleistet ist, sondern dies kann durch jegliche andere Maßnahme, welche dem Fachmann geläufig ist erfolgen. Ebenfalls ist es nicht zwingend notwendig, dass die anderen Enden der Führungen, welche nicht durch die Trägerstruktur aufgenommen sind, abweichend von der Darstellung in Figur 1 ebenfalls miteinander verbunden sind, solange die Schwimmkörper in ihrer unabhängigen oszillierenden Bewegung nicht behindert werden.

Die in Figur 1 beispielhaft dargestellte Anlage zeigt die Schwimmkörper 2 durch elastische Elemente 8 gegenüber der Trägerstruktur 6 vorgespannt, welche in dieser Ausführungsform Zug-Druck-Federn sind. Dabei sind die Federn je nach relativer Position des Schwimmkörpers 2 zur Führung 4 entweder auf Druck oder auf Zug belastet. Damit wird sichergestellt dass der Schwimmkörper um eine Zwischenposition an seiner jeweiligen Führung pendeln kann, und die Trägerstruktur weitgehend horizontal, elastisch, in etwa parallel zur Wasser oberfläche gehalten wird. Je weniger sich die Trägerstruktur mit den darin oder daran befindlichen Führungen bewegt und gegenüber den Schwimmkörpern 2 in Ruhe ist, desto effektiver kann eine Energieumwandlung der Wellenenergie in nutzbare Energie erfolgen. Eine flächenmäßige Vergrößerung der Anlage führt zu einer Verringerung der Bewegung der Trägerstruktur.

In Figur 1 ist ein Wellenkraftwerk beispielhaft mit vier Schwimmkörpern 2 dargestellt, was eine praktikable Untergrenze der Ausführung eines erfindungsgemäßen Wellen- oder Impulskraftwerks darstellt. Zwar ist theoretisch ein erfindungsgemäßes Wellenkraftwerk mit nur zwei Schwimmkörpern 2 und zwei Führungen 4 mit dem entsprechenden Versteifungen 6 vorstellbar, jedoch dürfte das Kippmoment, welches eine solche Anordnung aufweist, derart groß sein, dass ein effiziente Energieumwandlung nicht sinnvoll ist. Die in Figur 1 gezeigte Anordnung mit vier Schwimmkörpern 2 und vier Führungen 4 kann somit als Grundmodul verstanden werden, wobei die Verbindung derartiger Grundmodule genauso steif, biegefest sowie zug- und druckfest ausgebildet sein muss, wie die Verbindung der Führungen untereinander innerhalb des Moduls. Aus fertigungstechnischen Gründen kann es von Vorteil sein, den Aufbau eines Wellenkraftwerks gemäß der Erfindung modular zu gestalten und beispielsweise von Zweier oder Vierer-Modulen auszugehen.

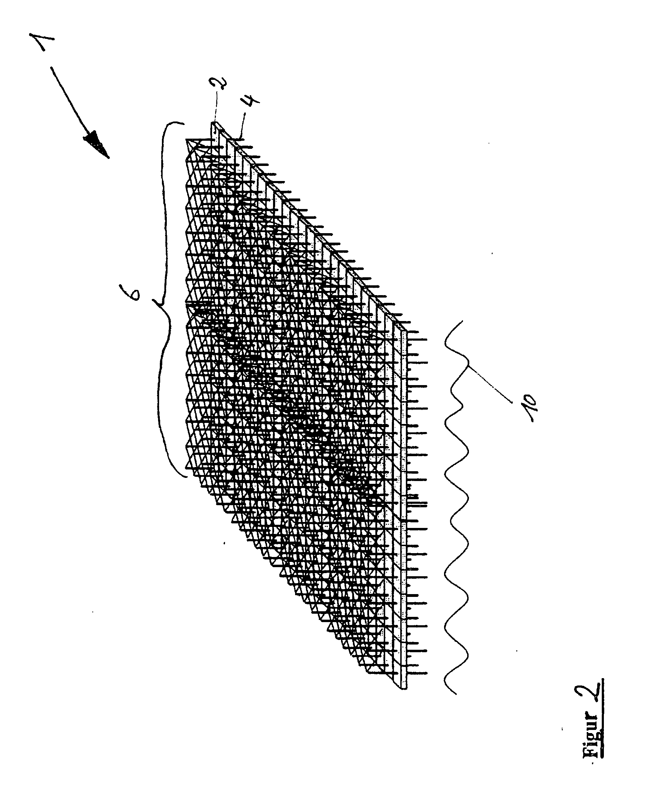

Figur 2 zeigt ein aus einer Vielzahl von Schwimmkörper und Führungen aufgebauten Wellenkraftwerk in rechteckiger Ausführungsform, welches teppichartig die Meeresoberfläche bedeckt. Lässt man die angedeuteten Wellen 10 gedanklich durch den Teppich laufen so ist leicht ersichtlich, dass eine Welle, die die aufeinanderfolgenden Schwimmkörper zeitlich nacheinander wellenförmig auslenkt, wenn die Welle durch das Wellenkraftwerk läuft (vergleichbar mit einer "La-Ola-Welle" durch ein Sportstadion). Mittels der einzelnen Schwimmkörper wird die Welle von den einzelnen Schwimmkörpern sozusagen nachgebildet, d.h. die Wellenform wird durch die Vielzahl der Schwimmkörper kopiert. Da sich nicht alle Schwimmkörper gleichzeitig auf einem Wellenberg oder in einem Wellental befinden bleibt bei entsprechend großer Auslegung des Wellenkraftwerks die Summe der Auftriebskräfte im Gleichgewicht mit der Summe der Gewichtskräfte, wodurch die Trägerstruktur in ihrer räumlichen Anordnung relativ zur Wasseroberfläche im Wesentlichen unbewegt bleibt. Jeder Schwimmkörper verhält sich dabei ähnlich einem Fahrzeugrad, welches an einem Auto befestigt ist, das über eine unebene Schotterstrecke fährt.

Aus Figur 2 wird ebenfalls ersichtlich, dass über die Vielzahl der Verstrebungen bzw. Verbindungen zwischen den einzelnen Führungen 4 Leitungen ausgebildet sein können, um bspw. die umgewandelte Energie zentral einem Energiespeicher zuzuführen. Dabei können die einzelnen Leitungen zusammengefasst werden oder aber auch über die Eckpunkte aus dem teppichartigen Wellenkraftwerk abgeleitet werden.

Figur 2 macht auch deutlich, dass die fachwerkartige Struktur der Trägerstruktur ebenfalls als eine geschlossene Platte ausgebildet sein kann, solange die Führungen 4 im Wesentlichen parallel zueinander in vertikaler Ausrichtung in der Bewegungsrichtung der Schwimmkörper ausgerichtet bleiben.

Figur 1 und auch Figur 2 zeigen auf, dass die Führungen nicht nur auf einer Seite miteinander verbunden sein müssen, sondern auch auf der freien Seite durch Verstrebungen oder sonstige Einrichtungen miteinander Verbunden sein können, um die Parallelität der Führungen und deren Steifigkeit zu erhöhen.

Figur 2 macht weiterhin deutlich, dass von der ausgebildeten Trägerstruktur weitere Vorrichtungen getragen werden können, wie z. B. Energiespeicher, Vorrichtungen zum Weiterleiten der umgewandelten Energie oder auch Solarzellen, etc.

### Bezugszeichenliste

- 1: Wellen- oder Impulskraftwerk
- 2: Schwimmkörper
- 4: Führung
- 5: Verstrebung
- 6: Trägerstruktur
- 8: Elastisches Element
- 10: Welle/Wasseroberfläche

## Patentansprüche

1. Wellen- oder Impulskraftwerk mit einer Vielzahl von flächig, im Wesentlichen nebeneinander angeordneten Schwimmkörpern (2), die sich angetrieben durch Wellen (10) unabhängig voneinander oszillierend entlang von Führungen (4) bewegen, wobei die Führungen (4) miteinander so verbunden sind, dass sich eine gemeinsame, die Schwimmkörper (2) überspannende, in sich steife Trägerstruktur (6) ausbildet, so dass die Bewegungsenergie der jeweiligen Schwimmkörper (2) mittels Übertragungselemente, die auf den Schwimmkörpern (2) und den Führungen (4) angeordnet sind, auf Energieumwandlungseinrichtungen übertragbar ist, wobei jeder Schwimmkörper (2) der Vielzahl von Schwimmkörpern einzeln mittels elastischen Elementen (8) gegen die Trägerstruktur (6) vorgespannt ist, wobei die Führungen (4) in Amplitudenrichtung der Wellen (10) ausgerichtet sind und durch Verstrebungen (5) in Position gehalten werden.

2. Wellen- oder Impulskraftwerk nach Anspruch 1, bei dem die Schwimmkörper (2) quaderförmig ausgebildet sind.

3. Wellen- oder Impulskraftwerk nach Anspruch 1 oder 2, bei dem die Abmessungen der Schwimmkörper (2) quer zu deren Bewegungsrichtung kleiner sind als der Abstand zwischen zwei Wellenbergen.

4. Wellen- oder Impulskraftwerk nach einem der vorherigen Ansprüche, bei dem die Trägerstruktur (6) die Führungen (4) fachwerkartig miteinander verbindet.

5. Wellen- oder Impulskraftwerk nach einem der vorherigen Ansprüche, bei dem die Abmessungen Trägerstruktur (6) quer zur Bewegungsrichtung der Schwimmkörper (2) größer sind als der Abstand zwischen zwei Wellenbergen.

6. Wellen- oder Impulskraftwerk nach einem der vorherigen Ansprüche, bei dem die Trägerstruktur (6) in der Ebene senkrecht zur Bewegungsrichtung der Schwimmkörper (2) eine Tropfenform aufweist.

7. Wellen- oder Impulskraftwerk nach einem der vorherigen Ansprüche, bei dem die elastischen Elemente (8) Zug-Druck-Federn sind.

8. Wellen- oder Impulskraftwerk nach einem der vorherigen Ansprüche, bei dem die Trägerstruktur (6) durch die Vielzahl der Schwimmkörper (2) getragen wird.

9. Wellen- oder Impulskraftwerk nach einem der vorherigen Ansprüche, bei dem die Energieumwandlungseinrichtungen die Bewegungsenergie der Schwimmkörper (2) in elektrische, hydraulische, pneumatische oder optische Energie umwandeln.

10. Wellen- oder Impulskraftwerk nach einem der vorherigen Ansprüche, welches über eine oder mehrere Leinen mit einem Anker oder einer Muring gegen Abtreiben gesichert ist.

11. Wellen- oder Impulskraftwerk nach einem der vorherigen Ansprüche, bei dem die Schwimmkörper (2) und/oder die Trägerstruktur (6) mit dem Medium gefüllt werden, auf dem sie schwimmen, um sie unter die Oberfläche des Mediums zu befördern.

12. Wellen- oder Impulskraftwerk nach einem der vorherigen Ansprüche, bei dem an der Trägerstruktur (6) Photovoltaik-, Solarthermie-, Windenergieumwandlungs- oder Strömungsenergieumwandlungsvorrichtungen angeordnet sind.

## Claims

1. Wave power plant or pulse power plant having a multiplicity of floating bodies (2) arranged in a plane substantially alongside one another, which, driven by waves (10), move independently of one another in an oscillating manner along guides (4), wherein the guides (4) are connected together such that a common, inherently rigid support structure (6) spanning the floating bodies (2) is formed, so that the kinetic energy of each floating body (2) is transmissible to energy conversion devices by means of transmission elements which are arranged on the floating bodies (2) and the guides (4), wherein each floating body (2) of the multiplicity of floating bodies is preloaded individually against the support structure (6) by means of elastic elements (8), wherein the guides (4) are oriented in the amplitude direction of the waves (10) and are held in position by strut members (5).

2. Wave power plant or pulse power plant according to Claim 1, wherein the floating bodies (2) are of cuboidal design.

3. Wave power plant or pulse power plant according to Claim 1 or 2, wherein the dimensions of the floating bodies (2) transversely to the direction of movement thereof are smaller than the distance between two wave crests.

4. Wave power plant or pulse power plant according to one of the preceding claims, wherein the support structure (6) connects the guides (4) together in the manner of a framework.

5. Wave power plant or pulse power plant according to one of the preceding claims, wherein the dimensions of the support structure (6) transversely to the direction of movement of the floating bodies (2) are greater than the distance between two wave crests.

6. Wave power plant or pulse power plant according to one of the preceding claims, wherein the support structure (6) is drop-shaped in the plane perpendicular to the direction of movement of the floating bodies (2).

7. Wave power plant or pulse power plant according to one of the preceding claims, wherein the elastic elements (8) are tension-compression springs.

8. Wave power plant or pulse power plant according to one of the preceding claims, wherein the support structure (6) is supported by the multiplicity of floating bodies (2).

9. Wave power plant or pulse power plant according to one of the preceding claims, wherein the energy conversion devices convert the kinetic energy of the floating bodies (2) into electrical, hydraulic, pneumatic or optical energy.

10. Wave power plant or pulse power plant according to one of the preceding claims, which is secured via one or more lines to an anchor or a mooring to prevent drifting.

11. Wave power plant or pulse power plant according to one of the preceding claims, wherein the floating bodies (2) and/or the support structure (6) are filled with the medium on which they float, in order to send them under the surface of the medium.

12. Wave power plant or pulse power plant according to one of the preceding claims, wherein photovoltaic devices, solar-thermal devices, wind energy conversion devices or current energy conversion devices are arranged on the support structure (6).

## Revendications

1. Centrale utilisant l'énergie ou l'impulsion des vagues, comprenant une pluralité de flotteurs (2) plats, disposés essentiellement les uns à côté des autres, qui se déplacent par l'entraînement des vagues (10) indépendamment les uns des autres en oscillant le long de guides (4), les guides (4) étant reliés les uns aux autres de telle sorte qu'une structure porteuse (6) commune, rigide en soi, surmontant les flotteurs (2), soit formée, de telle sorte que l'énergie de mouvement des flotteurs respectifs (2) puisse être transmise à des dispositifs de conversion d'énergie au moyen d'éléments de transmission qui sont disposés sur les flotteurs (2) et les guides (4), chaque flotteur (2) de la pluralité de flotteurs étant précontraint individuellement au moyen d'éléments élastiques (8) contre la structure porteuse (6), les guides (4) étant orientés dans la direction de l'amplitude des vagues (10) et étant maintenus en position par des entretoises (5).

2. Centrale utilisant l'énergie ou l'impulsion des vagues selon la revendication 1, dans laquelle les flotteurs (2) sont réalisés sous forme parallélépipédique.

3. Centrale utilisant l'énergie ou l'impulsion des vagues selon la revendication 1 ou 2, dans laquelle les dimensions des flotteurs (2) transversalement à leur direction de mouvement sont inférieures à la distance entre deux sommets de vague.

4. Centrale utilisant l'énergie ou l'impulsion des vagues selon l'une quelconque des revendications précédentes, dans laquelle la structure porteuse (6) relie les guides (4) les uns aux autres à la manière d'un treillis.

5. Centrale utilisant l'énergie ou l'impulsion des vagues selon l'une quelconque des revendications précédentes, dans laquelle les dimensions de la structure porteuse (6) transversalement à la direction de mouvement des flotteurs (2) sont supérieures à la distance entre deux sommets de vague.

6. Centrale utilisant l'énergie ou l'impulsion des vagues selon l'une quelconque des revendications précédentes, dans laquelle la structure porteuse (6) présente une forme de goutte dans le plan perpendiculairement à la direction de mouvement des flotteurs (2).

7. Centrale utilisant l'énergie ou l'impulsion des vagues selon l'une quelconque des revendications précédentes, dans laquelle les éléments élastiques (8) sont des ressorts de traction-compression.

8. Centrale utilisant l'énergie ou l'impulsion des vagues selon l'une quelconque des revendications précédentes, dans laquelle la structure porteuse (6) est portée par la pluralité de flotteurs (2).

9. Centrale utilisant l'énergie ou l'impulsion des vagues selon l'une quelconque des revendications précédentes, dans laquelle les dispositifs de conversion de l'énergie convertissent l'énergie de mouvement des flotteurs (2) en énergie électrique, hydraulique, pneumatique ou optique.

10. Centrale utilisant l'énergie ou l'impulsion des vagues selon l'une quelconque des revendications précédentes, qui est fixée par le biais d'une ou plusieurs lignes à une ancre ou un amarrage l'empêchant de dériver.

11. Centrale utilisant l'énergie ou l'impulsion des vagues selon l'une quelconque des revendications précédentes, dans laquelle les flotteurs (2) et/ou la structure porteuse (6) sont remplis du milieu sur lequel ils flottent, afin de les amener sous la surface dudit milieu.

12. Centrale utilisant l'énergie ou l'impulsion des vagues selon l'une quelconque des revendications précédentes, dans laquelle des dispositifs de conversion photovoltaïque, de conversion de l'énergie solaire, de conversion de l'énergie éolienne ou de conversion de l'énergie d'écoulement sont disposés sur la structure porteuse (6).
